Europäisches Patentamt

**European Patent Office**

**Office européen des brevets**

(19)

(11) Publication number: **0 024 858**
**A2**

(12) **EUROPEAN PATENT APPLICATION**

(21) Application number: **80302809.1**

(22) Date of filing: **14.08.80**

(51) Int. Cl.³: **H 04 N 5/76**

(30) Priority: **22.08.79 US 68530**

(43) Date of publication of application:
**11.03.81 Bulletin 81/10**

(84) Designated Contracting States:
**AT BE CH DE FR GB IT LI LU NL SE**

(71) Applicant: **DISCOVISION ASSOCIATES**
P.O. Box 6600 3300 Hyland Avenue
Costa Mesa, California 92626(US)

(72) Inventor: **Dakin, Wayne Ray**
816, Camino Real
No.204, Redondo Beach California 90277(US)

(74) Representative: **Arthur, George Fitzgerald et al,**
KILBURN & STRODE 30, John Street
London WC1N 2DD(GB)

(54) **Video record disc and playback apparatus and method for it.**

(57) A video recording disc for use with programmable playback apparatus, wherein information recorded on the disc includes a video signal and a digital programme instruction sequence for use by the apparatus in sequencing its operating mode in a prescribed fashion. The recorded video signal includes a carrier that is normally modulated by an audio signal, but that, for a limited number of selected tracks on the disc, is modulated by the digital programme instruction sequence, whereby the playback apparatus can operate initially to scan the selected tracks to recover the recorded programme instruction sequence after which the operating mode of the apparatus is controllably sequenced in accordance with the recovered instructions.

*Fig.3*

EP 0 024 858 A2

.1.

## VIDEO RECORD DISC AND PLAYBACK
## APPARATUS AND METHOD FOR IT

This invention relates to video recording discs for example, discs carrying conventional video signals and an audio sub-carrier signal in a plurality of substantially circular and concentrically arranged recording tracks, with each frame of the video signal recorded on a separate track.

According to the present invention, a video disc carries recorded information in a plurality of substantially circular and concentrically arranged recording tracks, which recorded information comprises a video signal, and further comprises a programme signal constituting programme instructions for use by playback apparatus in controlling its operating sequence.

The programme instructions may cause the playback apparatus to automatically play a prescribed number of successive tracks, to search for a selected track, to scan a selected track in a repeated fashion and provide a stop-motion display of the frame recorded there, or to pause at a selected track and await an input of a prescribed manual "branch" command.

In the past, playback apparatus has been programmed by means of an external computer or a special keyboard device. Although this technique for programming the playback apparatus has proven satisfactory in many situations, it necessarily requires the use of devices external to the playback apparatus and record disc and, sometimes, substantial operator time and effort can be required to fully programme the apparatus.

The programme signal can be recorded on a limited number of selected tracks on the disc, whereby the apparatus can be programmed by initially scanning the selected tracks on the disc to recover the recorded program signal, and, thereafter, the apparatus can function to control its operating sequence in accordance with the recovered programme instructions.

In one embodiment, the programme data signal is in an fm, or split-phase, digital format and it frequency modulates one of two carriers that are modulated over the rest of the tracks by a pair of audio signals corresponding to the video signal. The sequence of program instructions includes approximately 1,000 8-bit bytes, and the successive bytes are preceded by a special lead-in code, to distinguish them from the audio signal that is normally present, and by a special synchronisation code to facilitate detection of the successive digital bits by the playback apparatus. Additionally, the sequence of instructions is followed by a conventional check sum code that can be used to verify that the successive programme bits have been properly detected by the playback apparatus.

Apparatus for playing back the special programmed video discs includes means for scanning the recording tracks to recover the recorded information, such means operating initially to scan the selected tracks of the record disc where the programme signal is recorded. The sequence of programme instructions is then extracted from the recovered signal and entered into a memory, for subsequent use by the playback apparatus in controlling its operating sequence.

The invention includes a method of recovering a video signal from a record disc in which information is recorded in a succession of substantially circular and concentrically arranged recording tracks in which method selected tracks are first scanned to recover a programme signal, programme instructions from the programme signal are stored, and the remaining tracks are scanned in accordance with the stored programme instructions.

The invention may be carried into practice in various ways, and one embodiment will now be described by way of example, with reference to the accompanying drawings; in which

FIGURE 1 is a schematic diagram of a video record disc that can be recorded in accordance with the present invention;

FIGURE 2 is a schematic diagram of the frequency spectrum of a video signal recorded on the disc of FIGURE 1, one of the two audio carriers being frequency modulated by a programme data signal;

FIGURE 3 is a schematic diagram showing the successive digital data components of the programme data signal recorded on the disc of FIGURE 1; and

FIG 4 is a simplified block diagram of decoder apparatus for demodulating the audio carrier, to recover the program data signal, and for storing the sequence of program instructions included in the recovered signal, for subsequent use in controlling the operating sequence of the playback apparatus.

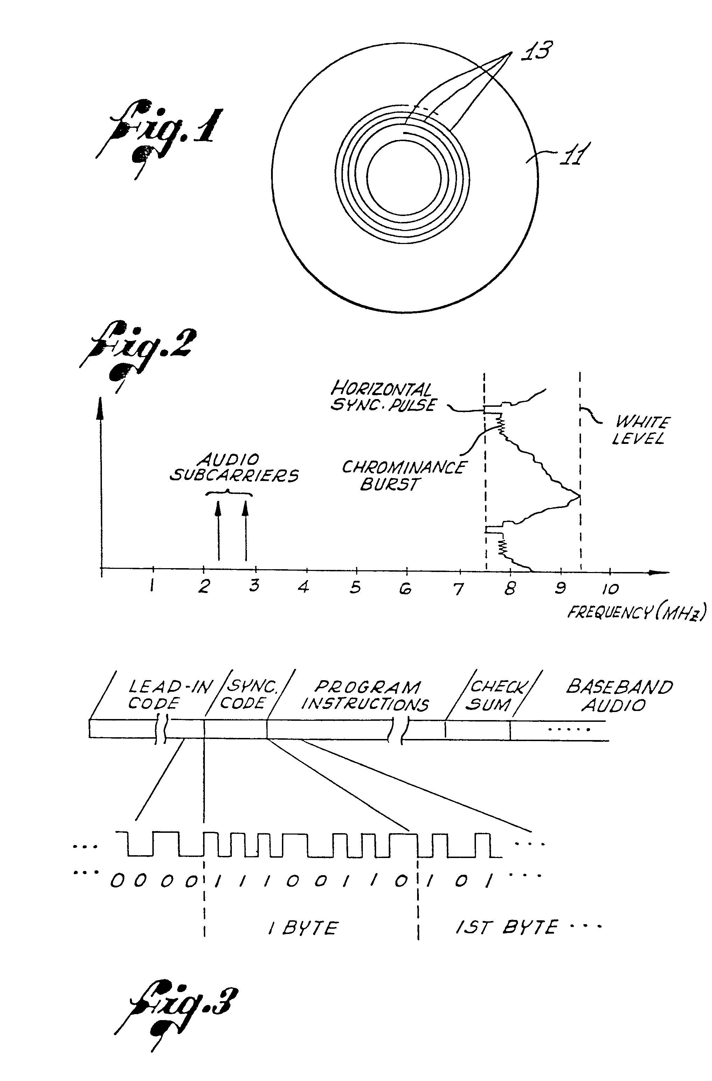

Referring now to the drawings, and particularly to FIG 1, there is shown a video record disc 11 suitable for recording information that includes a conventional video signal. The information is recorded in a succession of substantially circular and concentrically arranged recording tracks 13, with each frame of the video signal recorded on a separate track.

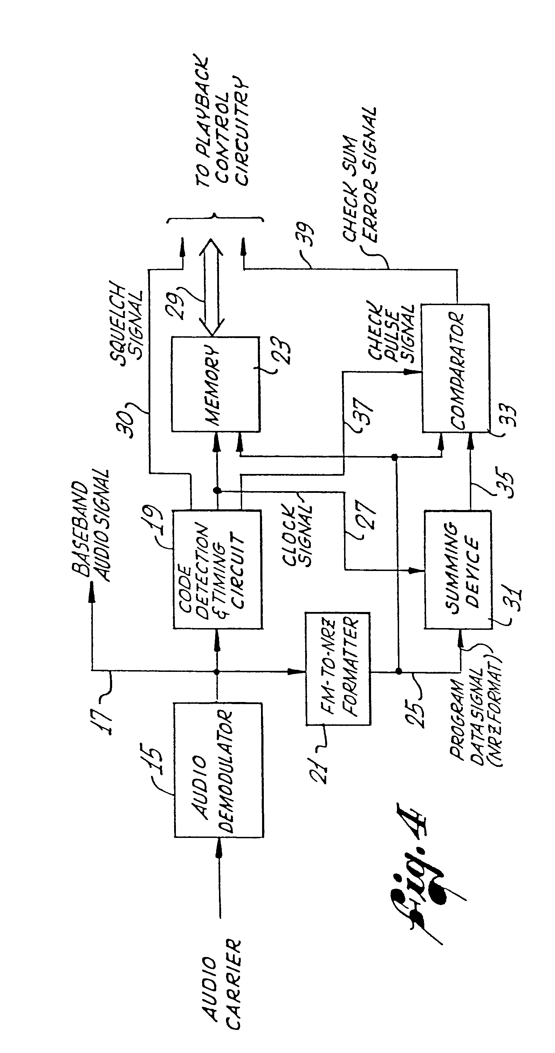

As shown in FIG.2. which is a schematic diagram of the frequency spectrum of the recorded composite video signal, the video portion of the signal is frequency modulated on a carrier having an instantaneous frequency that varies between 7.6 MHz, for the successive sync tips of the signal, and 9.3 MHz, for the white level of the signal. The recorded composite video signal further includes two audio carriers, located at approximately 2.3 and 2.8 MHz, which are normally frequency modulated by two separate audio signals.

The record disc 11 is suitable for use with playback apparatus that can be programmed to play back the information recorded on the disc in a prescribed, sequential fashion. The operating instructions that can be programmed into the playback apparatus can include, for example, instructions to scan a prescribed

.4a.

sequence of tracks and play back video frames recorded thereon, instructions to scan a prescribed track, repeatedly, for stop-motion, playback of the video frame recorded thereon, or instructions to search for a prescribed track on the disc.

In accordance with the invention, the information recorded on the disc 11 further includes a program data signal representative of the program instructions to be entered into the playback apparatus, such signal being frequency modulated on one of the two audio carriers, for a limited number of selected tracks on the disc. Thus, when the record disc is played back by the playback apparatus, the apparatus can scan the selected tracks to recover the program data signal, after which the apparatus can automatically operate in the corresponding, prescribed sequence.

More particularly, and with reference to FIG. 3, the program data signal is in an fm or split-phase digital format, wherein a transition in state occurs at all bit cell boundaries, and wherein a logical "0" bit remains in the same state for the entire bit time and a logical "1" bit includes a transition in state at the mid-point of the bit cell. In other words, a logical "0" bit is represented by one-half cycle of a square-wave signal having a frequency of one-half the bit rate, and a logical "1" bit is represented by one complete cycle of a square-wave signal having a frequency equal to the bit rate.

The program data signal has a bit rate of 5 kilobits per second, so its bandwidth is comparable to that of the baseband audio signal that is normally utilized to modulate the audio carrier. The self-clocking fm digital format permits the signal to be detected using relatively non-complex, conventional techniques, and avoids the need for the simultaneous recording of a separate synchronization signal or the need for relatively complex bit synchronization circuitry.

As shown in FIG. 3, the program data signal includes an initial lead-in code to function as a flag for identifying the subsequently recorded information as program instruction sequence, as distinguished from the audio signal that is normally present on the carrier. This lead-in code preferably comprises a square wave having a frequency 2.5 kilohertz, which corresponds to a succession of logical "0" data bits. Additionally, the lead-in code preferably has a duration of several thousand cycles, thereby extending over a number of tracks on the disc and ensuring that the playback apparatus will have become stabilized by the time it begins scanning the subsequently recorded program instruction sequence.

The lead-in code is followed by a special synchronization code that includes a single 8-bit byte of digital data, which, in turn, is followed by approximately 1,000 bytes of the digital program instruction sequence. The special synchronization code is included to ensure that the playback apparatus can determine the precise beginning of the first bit of the subsequent program data. Otherwise, if the first bit of the program instruction sequence were a logical "0", the playback apparatus would be unable to determine whether the bit was, in fact, the last bit of the lead-in code or the first bit of the program data.

Following the last byte of the program instruction sequence is a special 1-byte check sum code that corresponds to the eight least significant bits of an arithmetic sum of all of the approximately 1,000 successive bytes of program instructions. This is included to provide redundancy information that can be utilized by the playback apparatus in verifying that all of the successive program instruction bits have been properly detected.

Following termination of the program data signal on the recorded disc 11, the corresponding audio carrier is frequency-modulated by a baseband audio signal. Thus, both audio carriers are normally modulated by baseband audio signals, but for a limited number of tracks at the beginning of the recorded disc, only a single audio signal is present. It is not believed that this relatively short-duration deletion of the second audio signal is a significant performance drawback.

Referring now to FIG. 4, there is shown decoder apparatus for demodulating a selected one of the two audio carriers, to recover the program data signal therefrom, and for storing the recovered sequence of program instructions for subsequent use in controlling the operating sequence of the playback apparatus. The decoder apparatus includes an audio demodulator 15 for demodulating the frequency-modulated audio carrier to produce the baseband signal that comprises the program data signal for the selected tracks at the beginning of the recorded disc 11 and one of the audio signals thereafter. This baseband signal is output over line 17 to audio processing circuitry (not shown).

The decoder apparatus further includes a code detection and timing circuit 19 and an fm-to-NRZ formatter circuit 21, and the recovered program data signal is coupled to these two circuits over line 17 from the audio demodulator 15. The code detection and timing circuit monitors the program data signal to detect the lead-in code and the special synchronization code and to generate a corresponding clock signal, for detecting the successive bits of the subsequently recorded digital program instruction sequence. The fm-to-NRZ-formatter circuit operates, in a conventional manner, to convert the fm-format data signal to a corresponding NRZ-format signal, which is a format more suitable for detection of the successive program instructions bits.

For use in storing the successive program instruction bytes of the program data signal, the decoder apparatus of FIG.4 further includes a memory device 23. The NRZ-format signal is coupled over line 25 from the fm-to-NRZ formatter circuit 21 to the data input terminal of the memory device, and the successive program instruction bytes included in the signal are entered into the memory by the clock signal, which is coupled over line 27 from the code detection and timing circuit 19 to the clock terminal of the memory device. The memory device can advantageously comprise 1K x 8 RAM integrated circuits, connected in a conventional manner. After all of the successive program instruction bytes have been entered into the memory, the playback apparatus can function to selectively extract the instructions, using conventional control signals coupled over lines 29, to control its operating sequence.

When it has been determined by the code detection and timing circuit 19 that the baseband signal supplied on line 17 comprises the program data signal, as contrasted with an audio signal, the circuit produces a squelch signal for output on line 30. This squelch signal can be utilized by the playback apparatus to prevent the coupling of the baseband signal to an audio speaker at times when an audio signal is not present.

To properly utilize the special 1-byte check sum code included at the end of the program data signal, the decoder apparatus further includes a summing device 31 and a comparator 33. The summing device, which can include a pair of 8-bit registers and a binary full adder, monitors the NRZ-format program data signal and provides an arithmetic sum of the approximately 1,000 successive 8-bit bytes of program instruction sequence. The eight least significant bits of this arithmetic sum are coupled over line 35 to the comparator, for comparison with the eight bits of the special check sum code. At the appropriate time, when the check sum code is present in the program data signal, the code detection and timing circuit 19 outputs a check pulse signal for coupling over line 37 to the comparator, whereupon the two 8-bit sequences are compared. A check sum error signal is then output by the comparator whenever the two 8-bit codes do not correspond to each other. This check sum error signal is coupled over line 39 to the playback apparatus, where it can be utilized as a command to re-scan the successive recording tracks on which the program data signal is recorded.

The playback apparatus can further include program override means (not shown) for permitting the operating mode of the apparatus (e.g. normal playback

.9a.

mode, or track search mode) to be selected manually, notwithstanding the particular program instructions included in the program data signal recorded on the disc 11.

The program instruction portion of the program data signal has a duration of approximately 1,000 8-bit bytes, and the memory device 23 has a corresponding capacity. Thus, when program instructions having a duration less than the 1,000-byte memory capacity are required, the excess capacity can be conveniently filled using a succession of "halt" commands, for instructing the playback apparatus to terminate its operation. On the other hand, when the required program instructions have a duration that exceeds the 1,000-byte capacity, additional program data signal(s) can be recorded on other portions of the record disc 11. The last instruction included in the preceding block of program instructions can command the playback apparatus to search for the prescribed track on the disc where the next program data signal begins, whereby the memory 23 can be re-loaded with a new sequence of program instructions.

From the foregoing description, it should be apparent that the present invention provides an improved video recording disc for use with programmable playback apparatus, wherein information recorded on the disc comprises a video signal and a program signal that includes program instructions for sequencing the operating mode of the playback apparatus in a prescribed fashion. The playback apparatus can operate initially to scan the disc to recover the program signal therefrom, after which the operating mode of the apparatus is controllably sequenced in accordance with the recovered program instructions, thereby obviating the need for external programming devices.

Although the invention has been described in detail with reference to its presently preferred embodiment, it will be understood by one of ordinary skill in the art that various modifications can be made, without departing from the spirit and scope of the invention. Accordingly, it is not intended that the invention be limited, except as by the appended claims.

.11.

CLAIMS

1.   A record disc carrying recorded information
in a plurality of substantially circular and
concentrically arranged recording tracks, which recorded
information comprises a video signal and further
comprises a programme signal constituting programme
instructions for use by playback apparatus in
controlling its operating sequence.

2.   A disc as claimed in Claim 1 wherein the
programme signal is recorded on a limited number of
selected tracks on the disc, whereby the playback
apparatus can operate initially to scan the selected
tracks to recover the programme signal therefrom,
after which it can operate in a prescribed sequence
corresponding to the recovered programme
instructions.

3.   A disc as claimed in Claim 2 wherein the video
signal includes a carrier normally modulated by an
audio signal, but modulated by the programme signal
for the selected tracks.

4.   A disc as claimed in Claim 3 wherein the programme
signal includes an initial lead-in code, to
distinguish it from the audio signal that normally
modulates the carrier, followed by a digital programme
instruction sequence representative of the programme
instructions.

5.    A disc as claimed in Claim 6 wherein the lead-in code is a constant frequency digital signal, the digital programme instruction sequence is in an fm format, and the programme signal further includes a synchronisation code immediately following the lead-in code, and a check sum code following the programme instruction sequence.

6.    Apparatus for recovering from a record disc recorded information which includes a video signal and a programme signal constituting programme instructions for use by the apparatus in controlling its operating sequence, said apparatus comprising means for scanning the record disc to recover the information therefrom; means for extracting the programme signal from the recovered information and a memory for storing the programme instructions; and a control responsive to the stored programme instructions, for sequencing the scanning means correspondingly.

7.    Apparatus as claimed in Claim 6 including a demodulator of an audio carrier to produce a baseband audio signal, and means for detecting the presence of a lead-in code in the baseband signal.

8.    Apparatus as claimed in Claim 6 or Claim 7 including a scanner of successive bytes of the programme signal to produce a sum signal, and a comparator of the sum signal and a check sum code, derived from the programme signal for producing a check sum error signal.

.13.

9.    A method of recovering a video signal from a
record disc in which information is recorded in a
succession of substantially circular and concentrically
arranged recording tracks in which method selected
tracks are first scanned to recover a programme
signal, programme instructions from the programme
signal are stored, and the remaining tracks are
scanned in accordance with the stored programme
instructions.

10.    A method as claimed in Claim 9 in which the
disc is a disc as claimed in any of Claims 1-6.

Fig.1

Fig.2

HORIZONTAL SYNC. PULSE

WHITE LEVEL

AUDIO SUBCARRIERS

CHROMINANCE BURST

FREQUENCY (MHz)

LEAD-IN CODE | SYNC. CODE | PROGRAM INSTRUCTIONS | CHECK SUM | BASEBAND AUDIO

... 0 0 0 0 1 1 1 0 0 1 1 0 1 0 1 ...

1 BYTE          1ST BYTE ...

Fig.3

*Fig. 4*

AUDIO CARRIER → AUDIO DEMODULATOR (15) → CODE DETECTION & TIMING CIRCUIT (19) → MEMORY (23)

BASEBAND AUDIO SIGNAL (17)

SQUELCH SIGNAL (30)

29 → TO PLAYBACK CONTROL CIRCUITRY

FM-TO-NRZ FORMATTER (21)

CLOCK SIGNAL (27)

PROGRAM DATA SIGNAL (NRZ FORMAT) (25)

SUMMING DEVICE (31)

COMPARATOR (33)

CHECK PULSE SIGNAL (37)

CHECK SUM ERROR SIGNAL (39)

35

2/2

0024858